(19) Europäisches Patentamt

European Patent Office

Office européen des brevets

(11) **EP 1 901 448 A1**

(12) **EUROPEAN PATENT APPLICATION**

(43) Date of publication:
**19.03.2008 Bulletin 2008/12**

(51) Int Cl.:
**H04B 10/08** *(2006.01)*    **G01M 11/00** *(2006.01)*

(21) Application number: **06291452.8**

(22) Date of filing: **14.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Alcatel Lucent**
**75008 Paris (FR)**

(72) Inventor: **Pfeiffer, Dr. Thomas**
**70569 Stuttgart (DE)**

(74) Representative: **Kohler Schmid Möbus**
**Patentanwälte**
**Ruppmannstrasse 27**
**70565 Stuttgart (DE)**

(54) **Noise improved pulsed OTDR**

(57)    A method of pulsed OTDR (optical time domain reflectometry) measurement, wherein single OTDR test signals (1) are sent into an optical fiber (2) with an optical light source, is characterized in that the single OTDR test signals are modulated during their duration. The inventive method results in a low level of electrical noise on the backscattered OTDR signal, even if a narrowband optical light source is used in an embedded OTDR system.

A pulse generator (31) generates separate rectangular signals (32),whereas a dummy data source (33) provides continuously a dummy data signal (34). An AND-gate (35) multiplies the signals (32,34) and the generated laser drive signal (36) is fed into a DFB laser (37).

Fig. 3

**Description**

Background of the invention

The invention relates to a method of pulsed OTDR (optical time domain reflectometry) measurement, wherein single OTDR test signals are sent into an optical fiber with an optical light source.

Such a method is known from the ITG-Konferenz "Breitbandversorgung in Deutschland - wie schaffen wir Anschluss?", presentation "Kostengünstige integrierte Glasfaserüberwachung - jederzeit und uberall", J. Hehmann, H. Schmuck and Th. Pfeiffer, Berlin, 12./13.10.2005.

Optical fibers, such as glass fibers, are used to transport data. OTDR is a method of surveying the physical condition of an optical fiber, e.g. to find sharp bends or breaks limiting or preventing transmission of data traffic. Optical signals are sent down the optical fiber, and are backscattered by Rayleigh scattering or reflected at a location of a disturbance. The transit time of the backscattered or reflected optical signal can be analysed to find the distance of the disturbance from the input location of the optical signals.

In pulsed OTDR system implementations, a single optical signal is sent down the optical fiber, and the backscattered signal is recorded as a function of time. The delay between input of the optical signal and the arrival of a reflection from a disturbance is measured directly. Pulsed OTDR requires a data traffic interruption, but can be done with simple equipment.

In swept sine wave OTDR systems, a sine wave signal is modulated on top of a regular data signal. The frequency of the sine wave signal is swept, typically in kHz steps up to the MHz range. The received backscattered signal undergoes a Fourier transformation, after which a time delay can be determined. The swept sine wave OTDR method requires more effort at signal processing, but can in principle be done without an interruption of the data transfer.

OTDR measurements are typically performed with broadband light sources such as Fabry-Perot lasers or LEDs.

From the above mentioned ITG-Konferenz presentation it is known that the OTDR measurement function can be integrated into an optical transceiver module. In these so called embedded OTDR systems, the optical light source (typically a laser) used for data transfer is also used for generating OTDR signals. Modern optical transceivers are for high speed long reach systems, such as GPON (Gigabit passive optical network) over 20 km, and the data laser is a narrowband laser such as a DFB laser in order to avoid chromatic dispersion issues in data transmission. However, the small inherent optical linewidth of the DFB laser (typically in a range about 10 MHz when unmodulated or modulated at small frequencies) induces a significant amount of electrical noise on the backscattered OTDR signal. This is because the optical phase fluctuations of the backscattered light cannot effectively cancel out each other, in contrast to the case when using broadband optical light sources.

Object of the invention

It is the object of the invention to introduce a method of pulsed OTDR measurement with a low level of electrical noise on the backscattered OTDR signal, even if a narrowband optical light source is used in an embedded OTDR system.

Short description of the invention

This object is achieved, in accordance with the invention, by a method as introduced in the beginning, characterized in that the single OTDR test signals are modulated during their duration.

Instead of a OTDR test signals basically being constant during their duration, modulated OTDR test signals are used for pulsed OTDR measurement according to the invention. The test signals are modulated during their duration. This causes the effective optical linewidth of the optical light source, e.g. a DFB laser, to broaden. The broadened linewidth reduces the electrical noise power.

This results in an improved OTDR measurement sensitivity and reduces the number of averages needed to achieve a reasonable signal to noise ratio (SNR). In this respect, the inventive method helps reducing the measurement time, and thus the time of data transfer interruption in pulsed OTDR.

The inventive method might involve a reduced electrical OTDR signal power, but this is overcompensated by the reduction of electrical noise.

With the line width broadened by the inventive method, the "natural" linewidth of the optical light source (without modulation) becomes practically irrelevant, and does not deteriorate the SNR in case of a narrowband optical light source.

Preferred variants of the invention

In a preferred variant of the inventive method, the single OTDR test signals are amplitude modulated and/or intensity modulated and/or phase modulated and/or frequency modulated. These are the most important possibilities of impressing a modulation onto the OTDR test signals.

Particularly preferred is a variant wherein an optical light source is used for both sending single modulated OTDR test signals and data. In embedded OTDR, the optical light source typically is of narrowband type, and with the invention, a good signal to noise ratio can be achieved.

Further preferred is a variant of the inventive method, characterized in that the energy of a single modulated OTDR test signal is spread across an optical frequency range that is significantly wider, in particular at least twice as wide, than $f_{ts}$ with $f_{ts} = 1 / d_{ts}$ and $d_{ts}$: duration of a single modulated OTDR test signal. The duration of a single modulated test signal may be measured with respect to FWHM (=full width at half maximum). In particular, the rms width (root mean square width) of the optical power density spectrum of the single modulated OTDR signal is larger than $f_{ts}$. With such a significant fraction of the energy being outside the frequency range of width $f_{ts}$ about the center frequency, a good SNR improvement can be achieved.

In a preferred variant of the inventive method, for generating a single modulated OTDR test signal, a rectangular signal having the intended duration of the single modulated OTDR signal is modulated with a pattern changing at high speed, in particular wherein the pattern shifts between a minimum value and a maximum value at least 2 times, preferably at least 10 times, during the duration of the rectangular signal. This is particularly simple to realize in practice, e.g. with an AND-gate.

In an advantageous further development of this variant, the pattern is a dummy data signal with a bit rate of 1 Gbit/s or more. A dummy data signal is usually right at hand in an embedded ODTR, and therefore no further equipment is required for generation of the highspeed signal. The bit rate is high enough to achieve a good SNR improvement with typical OTDR pulse durations.

In an alternative advantageous further development of the above mentioned variant, the pattern is a periodic signal, in particular a sine wave signal or a square wave signal, with a frequency of 1 GHz or more. Periodic signals are easy to generate, and the frequency is high enough to achieve a good SNR improvement with typical OTDR pulse durations.

Further preferred is a variant wherein as the optical light source, a narrowband optical light source, in particular a narrowband laser, preferably a DFB(distributed feedback)-laser, is applied. Here a light source is considered narrowband if the inherent optical bandwidth (not considering modulation bandwidth or the pulse shape) is 20 MHz or less. Note that a typical DFB laser has an inherent linewidth of about 10 MHz, and in operation with typical rectangular OTDR pulses, the linewidth is not significantly modified. With the invention, the effective optical linewidth can be increased by modulation broadening; the typical broadening with the invention is 1-3 orders of magnitude, depending on the modulation signal applied. The narrowband optical light source is, by means of the invention, useable for OTDR measurements with a relatively low amount of electrical noise.

Also within the scope of the present invention is an optical transmitter with an embedded pulsed OTDR measurement unit, with an optical light source adapted for both sending single OTDR test signals and transmitting data into an optical fiber, characterized in that the OTDR measurement unit is adapted to send single OTDR test signals which are modulated during their duration. The inventive optical transmitter can achieve an excellent SNR with reflected OTDR signals, even if the optical light source is of narrowband type.

A preferred embodiment of the inventive optical transmitter provides that a pulse generator for generating a rectangular pulse and a dummy data source are connected to the inputs of an AND-gate, and the output of the AND-gate is connected to the optical light source, in particular wherein the optical light source is a DFB laser. This is a simple implementation that allows the use of the inventive method. Note that the pulse generator, the optical light source, and the AND-gate may be located on an optical transmitter module, which is connected to a separate dummy data source.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

Drawing

The invention is shown in the drawing.

Fig. 1    shows a schematic diagram illustrating pulsed OTDR measurement, as it can be done with the present invention;

Fig. 2    shows a diagram illustrating the electrical noise power as a function of the optical linewidth, with the linewidth of an inventively operated DFB laser indicated;

Fig. 3    shows schematically an embodiment of an inventive optical transmitter.

The invention describes a noise improved operation of an embedded pulsed OTDR system.

Usually, a pulsed OTDR measurement is performed by injecting a short optical test pulse into the fiber and detecting the backscattered optical power.

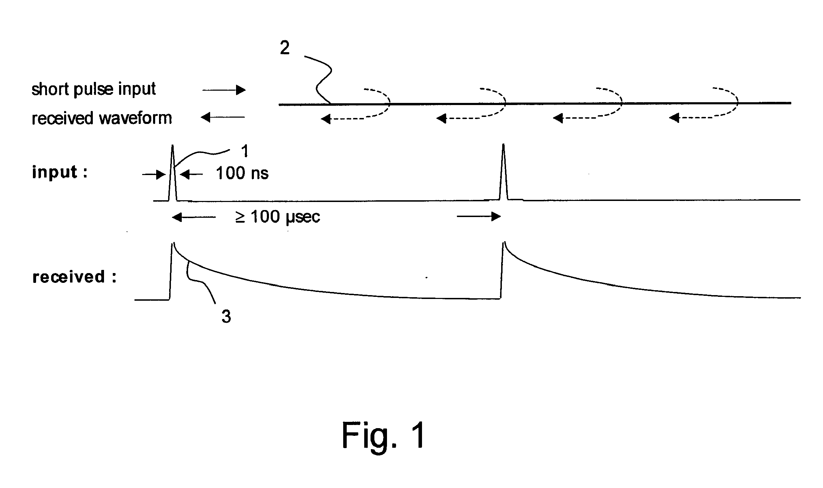

**Fig. 1** schematically illustrates the insertion of OTDR test pulses 1 into an optical fiber 2 and the detection of received signals 3 (top row, where the space coordinate is plotted to the right), as it can be done with the present invention. The test pulses 1 are have a duration of (here) 100 ns each (see middle row, where the time coordinate is plotted to the right, and sent intensity is plotted to the top), wherein a duration of 100 ns allows a defect detection resolution of about 10 m. Typical durations of OTDR test pulses range from 50 ns to 1000 ns. Usually, a multitude of test pulses 1 is used and their results are averaged in order to compensate for noise and thus to get a good statistic. The pulses 1 are (here) separated by time intervals of 100 $\mu$s, wherein a time interval of 100 $\mu$s allows the investigation of a 10 km fiber. The received signals 3, measured typically with a photo diode, are a result of Rayleigh backscattering throughout the fiber under investigation (see in particular bottom row, where the time is plotted to the right, and the received intensity is plotted to the top). If there are no defects, the received signals have an exponentially decaying shape, since continually less light reaches the parts of the fiber farther away and gets backscattered. The time constant $\tau$ of the exponential decay is typically about 100 $\mu$s. However, in case of a defect, deviations from the exponentially decaying shape will occur, such as extra peaks (not shown).

Due to the phase noise on the received signal induced by the statistical Rayleigh backscattering, the electrical signal is superimposed with noise. The electrical noise power density (expressed here as the squared electrical noise current per bandwidth) $\widetilde{\delta i}_{Rayl}^{2}(f)$ is related to the optical linewidth of the optical light source according to

$$\widetilde{\delta i}_{Rayl}^{2}(f) = \left( 2 i_{Rayl} \sum_{n} i_{refl,n} + i_{Rayl}^{2} \right) \cdot \frac{4\Delta f}{\Delta f^{2} + f^{2}}$$

where $i_{Rayl}$ is the electrical current for the detected optical backscattered power (Rayleigh signal), $\Delta f$ is the optical linewidth of the optical light source and f is the electrical frequency at which the electrical noise power density is measured. As can be seen from the above formula, the noise is even enhanced, if the Rayleigh backscattered power is superimposed with discrete optical reflections, represented by the respective current $i_{refl,n}$. The resulting signal-to-noise ratio

$$SNR = \frac{\left( i_{Rayl} + i_{refl} \right)^{2}}{\int \widetilde{\delta i}_{Rayl}^{2}(f) \, df}$$

can take values between SNR<1 and SNR>1, depending on the linewidth of the optical light source.

Using typical optical linewidth values for DFB lasers and applying simple test pulses (i.e. unmodulated test pulses, such as rectangular test pulses) of 100 ns duration or more, the resulting SNR is <1.

When, however, an additional high speed modulation is applied to the DFB laser (e.g. Gbps data or GHz sinewave), then the optical linewidth is broadened by 2-3 orders of magnitude due to the modulation bandwidth and due to the chirp characteristics of DFB lasers. In that case the SNR can get >1.

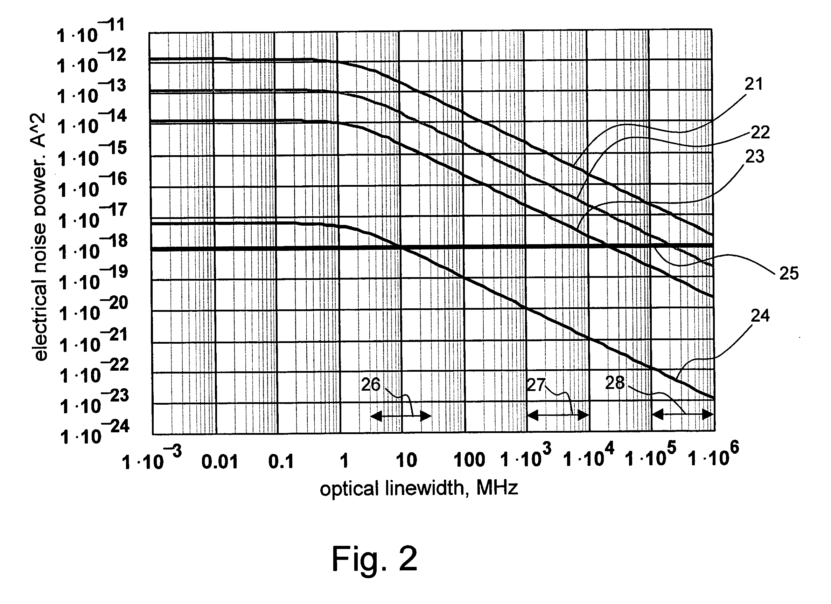

The dependence of the electrical noise power $\int \widetilde{\delta i}_{Rayl}^{2}(f) \, df$ on the optical linewidth is depicted in **Fig. 2** for a Rayleigh backscattering signal of $i_{rayl}$=1 nA superimposed by different values of additional reflection induced photocurrents (receiver bandwidth 2.5 MHz). Line 21 indicates the noise for $i_{refl}$=100 $\mu$A, line 22 indicatest the noise for $i_{refl}$=10 $\mu$A, line 23 indicates the noise for $i_{refl}$=1 $\mu$A, and line 24 indicates the noise for no reflection. For reference, the electrical signal power due to Rayleigh backscattering is also shown ($i_{Rayl}$=1 nA), see line 25.

Assuming an injected optical power of 1 mW, the above values occur for backscattering of e.g. 100 ns long test pulses at 1310 nm in standard singlemode fibers near the fiber input end without and with an additional discrete reflection of -10, -20, -30 dB, respectively, assuming 1 A/W detector sensitivity and neglecting coupling losses.

For an unmodulated operated DFB laser with an optical linewidth of about 10 MHz (see arrow 26), the electrical noise power is always much higher than for an inventively Gbps modulated DFB laser with an optical linewidth of about $10^{3}$ to $10^{4}$ MHz (see arrow 27). For comparison, an FP laser with an optical linewidth of about $10^{5}$ to $10^{6}$ MHz (see arrow 28) would generate even less electrical noise power.

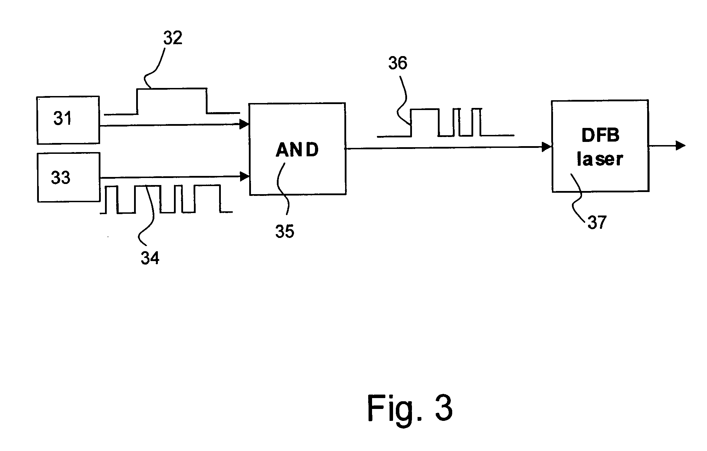

A setup for the inventive laser modulation scheme is shown in Fig. 3, based on a high speed modulation with Gbps data signals. The setup is part of an inventive optical transmitter or transceiver, comprising an embedded pulsed OTDR measurement unit.

A pulse generator 31 generates separate rectangular signals 32 with the duration intended for modulated OTDR test pulses, whereas a dummy data source 33 provides continuously a dummy data signal 34, which is a Gbps data pattern. The dummy data are advantageously generated by the electrical source that is otherwise used for data transmission (e.g. idle cells). The pulse generator 31 and the dummy data source 33 are connected to the inputs of an AND-gate 35, which multiplies the signals 32, 34 and generates an amplitude modulated laser drive signal 36. The laser drive signal 36 is fed into a DFB laser 37, which generates modulated OTDR test signals which are fed into an optical fiber which is to be investigated.

In summary, the invention proposes an embedded pulsed OTDR system, using a narrowband optical light source, but applying as OTDR test pulses modulated signals. As a result, the effective optical bandwidth of the optical light source used for emitting the OTDR test signals broadens according to the modulation bandwidth (and also the laser chirp). The modulation bandwidth exceeds the unmodulated bandwidth of the optical light source by typically two orders of magnitude or more, resulting in an improved SNR with the detection of the backscattered OTDR signal.

## Claims

1. Method of pulsed OTDR (optical time domain reflectometry) measurement,
   wherein single OTDR test signals (1) are sent into an optical fiber (2) with an optical light source,
   **characterized in that**
   the single OTDR test signals are modulated during their duration.

2. Method according to claim 1, **characterized in that** the single OTDR test signals are amplitude modulated and/or intensity modulated and/or phase modulated and/or frequency modulated.

3. Method according to claim 1, **characterized in that** an optical light source is used for both sending single modulated OTDR test signals and data.

4. Method according to claim 1, **characterized in that** the energy of a single modulated OTDR test signal is spread across an optical frequency range that is significantly wider, in particular at least twice as wide, than $f_{ts}$ with $f_{ts} = 1 / d_{ts}$ and $d_{ts}$: duration of a single modulated OTDR test signal.

5. Method according to claim 1, **characterized in that** for generating a single modulated OTDR test signal, a rectangular signal (32) having the intended duration of the single modulated OTDR signal is modulated with a pattern (34) at high rate,
   in particular wherein the amplitude of the pattern (34) changes between a minimum value and a maximum value at least 2 times, and preferably at least 10 times, during the duration of the rectangular signal (32).

6. Method according to claim 5, **characterized in that** the pattern (34) is a dummy data signal with a bit rate of 1 Gbit/s or more.

7. Method according to claim 5, **characterized in that** the pattern is a periodic signal, in particular a sine wave signal or a square wave signal, with a frequency of 1 GHz or more.

8. Method according to claim 1, **characterized in that** as the optical light source, a narrowband optical light source, in particular a narrowband laser, preferably a DFB(distributed feedback)-laser (37), is applied.

9. Optical transmitter with an embedded pulsed OTDR measurement unit, with an optical light source adapted for both sending single OTDR test signals and transmitting data into an optical fiber,
   **characterized in**
   **that** the OTDR measurement unit is adapted to send single OTDR test signals which are modulated during their duration.

10. Optical transmitter according to claim 9, **characterized in that** a pulse generator (31) for generating a rectangular pulse (32) and a dummy data source (33) are connected to the inputs of an AND-gate (35), and the output of the AND-gate (35) is connected to the optical light source, in particular wherein the optical light source is a DFB laser (37).

Fig. 1

Fig. 2

Fig. 3

**European Patent Office**

## EUROPEAN SEARCH REPORT

Application Number

EP 06 29 1452

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 524 781 A (CIT ALCATEL [FR]) 20 April 2005 (2005-04-20) * abstract; figures 2,3 * * column 4, line 2 - line 6 * * column 4, line 30 - line 37 * ----- | 1-10 | INV. H04B10/08 G01M11/00 |
| X | EP 0 772 265 A1 (SUMITOMO ELECTRIC INDUSTRIES [JP]) 7 May 1997 (1997-05-07) * column 1, line 45 - line 47; figure 29 * * column 4, line 1 - line 11 * * column 4, line 29 - line 33 * * column 40, line 27 - line 50 * ----- | 1,9 | |
| X | WO 97/46871 A (GN NETTEST NEW YORK [US]) 11 December 1997 (1997-12-11) * abstract; claims 1-6; figures 1,1A,1B * * page 3, line 17 - page 4, line 11 * * page 10, line 12 - line 23 * ----- | 1 | |
| X | US 5 353 110 A (JONES MICHAEL D [US]) 4 October 1994 (1994-10-04) * abstract; figures 1-3 * ----- | 1 | |
| X | EP 1 219 945 A2 (ANDO ELECTRIC [JP]) 3 July 2002 (2002-07-03) * abstract; figures * * paragraph [0044] * ----- | 1 | TECHNICAL FIELDS SEARCHED (IPC) G01M H04B |
| E | EP 1 753 159 A (CIT ALCATEL [FR]) 14 February 2007 (2007-02-14) * abstract; figure 3 * ----- | 1-3,5-7, 9 | |

The present search report has been drawn up for all claims

| Place of search | Date of completion of the search | Examiner |
|---|---|---|
| Berlin | 6 March 2007 | Fritz, Stephan C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 1452

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2007

| Patent document cited in search report | | Publication date | Patent family member(s) | | Publication date |
|---|---|---|---|---|---|
| EP 1524781 | A | 20-04-2005 | NONE | | |
| EP 0772265 | A1 | 07-05-1997 | AU | 707568 B2 | 15-07-1999 |
| | | | AU | 6587196 A | 08-05-1997 |
| | | | CA | 2186545 A1 | 02-05-1997 |
| | | | CN | 1172254 A | 04-02-1998 |
| | | | DE | 69628624 D1 | 17-07-2003 |
| | | | DE | 69628624 T2 | 29-04-2004 |
| | | | ES | 2199267 T3 | 16-02-2004 |
| | | | JP | 3534550 B2 | 07-06-2004 |
| | | | JP | 9184788 A | 15-07-1997 |
| | | | US | 5771250 A | 23-06-1998 |
| WO 9746871 | A | 11-12-1997 | US | 6122043 A | 19-09-2000 |
| US 5353110 | A | 04-10-1994 | JP | 5196541 A | 06-08-1993 |
| EP 1219945 | A2 | 03-07-2002 | JP | 2002168733 A | 14-06-2002 |
| | | | US | 2002089736 A1 | 11-07-2002 |
| EP 1753159 | A | 14-02-2007 | CN | 1913398 A | 14-02-2007 |
| | | | US | 2007036545 A1 | 15-02-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. HEHMANN ; H. SCHMUCK ; TH. PFEIFFER.** Breitbandversorgung in Deutschland - wie schaffen wir Anschluss. *Kostengünstige integrierte Glasfaserüberwachung - jederzeit und uberall,* 12 October 2005